# EUROPÄISCHE PATENTANMELDUNG

(11) **EP 2 251 664 A2**
(43) Veröffentlichungstag der Anmeldung: **17.11.2010**
(21) Anmeldenummer: 10161427.9
(22) Anmeldetag: 29.04.2010
(51) Int. Cl.: G01L 9/06

(54) **Differenzdrucksensor**

(30) Priorität: 13.05.2009 DE 102009021064; 10.06.2009 DE 102009024576
(71) Anmelder: Trafag AG, 8708 Männedorf (CH)
(72) Erfinder: Hauri, Peter, CH-8634, Hombrechtikon (CH); Staiger, Ulrich, CH-8260, Stein am Rhein (CH); Zeisel, Dieter, 8127 Forch (CH)
(74) Vertreter: Kastel, Stefan

(57) **Zusammenfassung**

Die Erfindung betrifft einen Differenzdrucksensor (19) zum Messen einer Druckdifferenz zwischen einem ersten Druck (p1) und einem zweiten Druck (p2) mit einer ersten Membran (12), die auf einer ersten Seite (30) mit dem ersten Druck (p1) beaufschlagbar ist. Um einen genauen, universell einsetzbaren zuverlässigen Differenzdrucksensor zu schaffen, wird vorgeschlagen, dass die erste Membran (12) an ihrer der ersten Seite (30) abgewandten zweiten Seite (32) mit dem zweiten Druck (p2) beaufschlagbar ist.

## Beschreibung

Die Erfindung betrifft einen Differenzdrucksensor zum Messen einer Druckdifferenz zwischen einem ersten Druck und einem zweiten Druck mit einer ersten Membran, die auf einer ersten Seite mit dem ersten Druck beaufschlagbar ist.

Ein solcher Differenzdrucksensor ist z.B. aus der DE 10 2007 022 842 B4 bekannt.

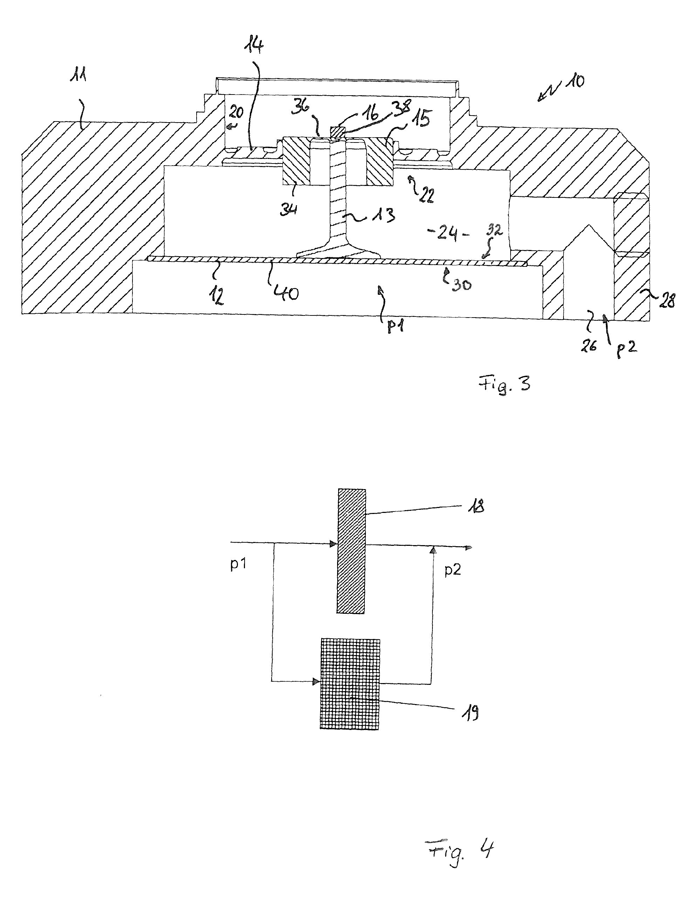

Die beigefügte Figur 4 zeigt ein schematisches Blockschaubild zur Darstellung eines beispielhaften Einsatzzweckes von Differenzdrucksensoren. In der Figur 4 ist ein Filter 18 dargestellt, das beispielsweise in der Prozesstechnik in einem technischen Verfahrensprozess oder im Bereich eines Motors eingesetzt wird. Für die Überwachung von Filtern 18 in der Prozesstechnik oder im Motorenbereich werden Differenzdrucksensoren 19 verwendet, die eine einwandfreie Funktion des Filters 18 zuverlässig überwachen. Dabei werden hohe Anforderungen sowohl an die Sensorstabilität als auch an den wechselnden Temperaturbereich gestellt. Die Anforderungen an die Sensorstabilität betreffen insbesondere die Stabilität der Nullpunktslage sowie die Forderung, dass keine Veränderung der Sensitivität auftreten soll. Darüberhinaus soll der Differenzdrucksensor 19 im Betrieb selbst robust gegenüber den zum Teil stark verschmutzten flüssigen oder gasförmigen Medien sein. Eine lange Lebensdauer von etwa 10 Jahren sollte erreicht werden.

Wie in Figur 4 gezeigt werden durch den Differenzdrucksensor 19 die Differenz eines vor dem Filter zu messenden ersten Druckes p1 und eines nach dem Filter zu messenden zweiten Druckes p2 gemessen. Figur 4 stellt ein Beispiel zum Einsatz eines Differenzdrucksensors dar, andere Einsatzgebiete sind denkbar. Differenzdrucksensoren werden heutzutage überwiegend mit zwei diskreten Drucksensoren realisiert, wobei die unterschiedlichen Signale meist aufwendig mathematisch miteinander verrechnet werden. Dies ist beispielsweise in der eingangs erwähnten DE 10 2007 022 842 B4 offenbart. Die beiden Drucksensoren liegen beispielsweise in einer Einheit nebeneinander und weisen jeweils eine gesonderte Membran auf. Dabei wird eine erste Membran ausschließlich mit dem ersten Druck p1 beaufschlagt und eine zweite Membran ausschließlich mit dem zweiten Druck p2. Die Differenz der mit diesen Drucksensoren gemessenen Drücke p1 und p2 werden mathematisch ermittelt.

Nachteilig bei diesem Verfahren sind die sehr großen Fehler die inhärent mit der Methodik vor allem bei hohen Systemdrücken (line pressures) und niedrigen Nutzsignalen verbunden sind.

Anwendungen der beschriebenen Differenzdrucksensoren finden sich vor allem in der Filterüberwachung von Schmierstoffen, beispielsweise in der Hydraulik, oder auch bei der Abgasnachbehandlung zum Beispiels im Bereich der Abgasrückführung (ABR, englisch EGR d.h. exhaust gas recirculation) in motorischen Katalysatorsystemen.

Aus der DE 101 31 688 A1 ist ein Drucksensor zum Messen eines einfachen einzelnen Druckes bekannt. Es ist darin beschrieben, wie ein auf Membranen abgestütztes Biegeelement als temperaturkompensiertes Drucksensorelement einsetzbar ist.

Aufgabe der Erfindung ist es, einen genaueren vielfältig einsetzbaren Differenzdrucksensor zu schaffen.

Diese Aufgabe wird durch einen Differenzdrucksensor mit den Merkmalen des Anspruches 1 gelöst.

Vorteilhafte Ausgestaltungen der Erfindung sind Gegenstand der Unteransprüche.

Die Erfindung schafft einen Differenzdrucksensor zum Messen einer Druckdifferenz zwischen einem ersten Druck und einem zweiten Druck mit einer ersten Membran, die auf einer ersten Seite mit dem ersten Druck beaufschlagt ist. Erfindungsgemäß ist nun vorgesehen, dass diese erste Membran an ihrer der ersten Seite abgewandten zweiten Seite mit dem zweiten Druck beaufschlagbar ist.

Durch die unmittelbare Beaufschlagung der ersten Membran an ihrer ersten Seite mit dem ersten Druck und an ihrer zweiten Seite mit dem zweiten Druck wird an der Membran selbst bereits ein Differenzdruck gebildet. Fehler durch Fehlanpassungen werden hierbei vermieden, außerdem werden so die Auslenkungen der Membran gering gehalten. Insgesamt ergibt sich ein gegenüber den bisher bekannten Differenzdrucksensoren weitaus einfacherer Aufbau, der dementsprechend auch einfacher beherrschbar und herstellbar ist.

Besonders bevorzugt ist die erste Membran mit einer zweiten Membran gekoppelt, so dass die beiden Drücke, deren Differenz zu messen ist, über zwei miteinander gekoppelte Membrane erfassbar sind. Durch die gekoppelten Membrane lassen sich Membransysteme bilden, die hinsichtlich Temperaturkompensation und Auslenkungseigenschaften optimiert sind.

Die erste und die zweite Membran sind vorzugsweise mittels eines beispielsweise als Stößel ausgebildeten Verbindungselementes miteinander gekoppelt. Insbesondere sind die Zentren der vorzugsweise als Kreisringmembrane ausgeführten Membrane zu gemeinsamen Bewegungen miteinander verbunden.

Besonders bevorzugt ist, dass bei einem solchen Differenzdrucksensor auch ein einzelner Wegaufnehmer, d.h. ein einzelnes Messelement zur Erfassung einer Auslenkung ausreichend ist. Dadurch ist ein sehr einfacher Aufbau möglich, wobei eine fehlerbehaftete elektronische oder mathematische Differenzdruckbildung aus zwei unterschiedlichen Sensorsignalen vermeidbar ist.

Wenn die zweite Membran Teil eines Membransystems mit mehreren Membranen ist, lassen sich die gewünschten Eigenschaften hinsichtlich Steifigkeit und Temperaturkompensation in einfacher Weise durch Auswahl und Dimensionierung der unterschiedlichen Membrane des Membransystems bilden. Beispielsweise dient eine äußeren Membran zur Temperaturausgleich und trägt radial innen eine Druckmesszelle mit der zweiten Membran und dem Biegeelement, welches ausschließlich die Auslenkung der zweiten Membran erfasst. Diese zweite Membran ist dann vorzugsweise mittels des Verbindungselements mit der ersten Membran gekoppelt.

Die zweite Membran liegt der zweiten Seite der ersten Membran zugewandt. Zwischen den beiden Membranen lässt sich so eine Kammer ausbilden, die - beispielsweise über einen Verbindungskanal - mit dem zweiten Druck beaufschlagbar ist.

Vorzugsweise ist die zweite Membran oder das gesamte die zweite Membran aufweisende Membransystem steifer ausgeführt als die erste Membran. Die relativen Steifigkeiten sind vorzugsweise derart, dass eine druckinduzierte Bewegung der ersten Membran durch die Kopplung mit der zweiten Membran um wenigstens eines Faktor 3, insbesondere einen Faktor zwischen 5 bis 10, abgeschwächt wird. Dadurch lassen sich die durch ein Messelement zu erfassenden Auslenkungswege sehr klein halten. Wenn die jeweilige Membrane nur sehr gering auslenken, ist die Materialbeanspruchung auch entsprechend gering, so dass der Differenzdrucksensor insgesamt sehr dauerhaft ausbildbar ist.

Vorzugsweise sind die Membrane und/oder andere Elemente, die mit dem zu messenden Druck in Berührung kommen können, aus medienkompatiblen Materialien ausgeführt. Vorzugsweise bestehen diese Bauteile aus rostfreiem Stahl oder unempfindlichen Legierungen (z.B. 1.4542/17-4PH, INCONEL oder auch 1.4301).

In besonders bevorzugter Ausgestaltung ist ein Differenzdrucksensorelement geschaffen, das nur ein einziges wegaufnehmendes Messelement aufweist und zwei medienkompatible Membrane aufweist, wobei eine zweite Membran Teil eines zusammengesetzten Membransystems ist. Dabei wirken nun beide anliegenden Drücke p1 und p2 über zwei miteinander gekoppelte medienkompatible Kreisringmembrane in geeigneter Weise zusammen, um ein druckproportionales Differenzsignal zu erzeugen.

Eine vorteilhafte Verwendung des Differenzdrucksensor in einem Überwachungsverfahren zum Überwachen des Filters, wie beispielsweise in Figur 4 gezeigt, ist Gegenstand des Nebenanspruches.

Ausführungsbeispiele werden anhand der beigefügten Zeichnung näher erläutert. Darin zeigt:
- Fig. 1: eine Schnittdarstellung durch eine erste Ausführungsform eines Differenzdrucksensorelements;
- Fig. 2: eine Schnittdarstellung durch einen mit dem Differenzdrucksensorelement aufgebauten Differenzdrucksensor;
- Fig. 3: eine Schnittdarstellung durch eine zweite Ausführungsform eines Differenzdrucksensorelements; und
- Fig. 4: ein Blockschaltbild einer vorteilhaften Verwendung des Differenzdrucksensors.

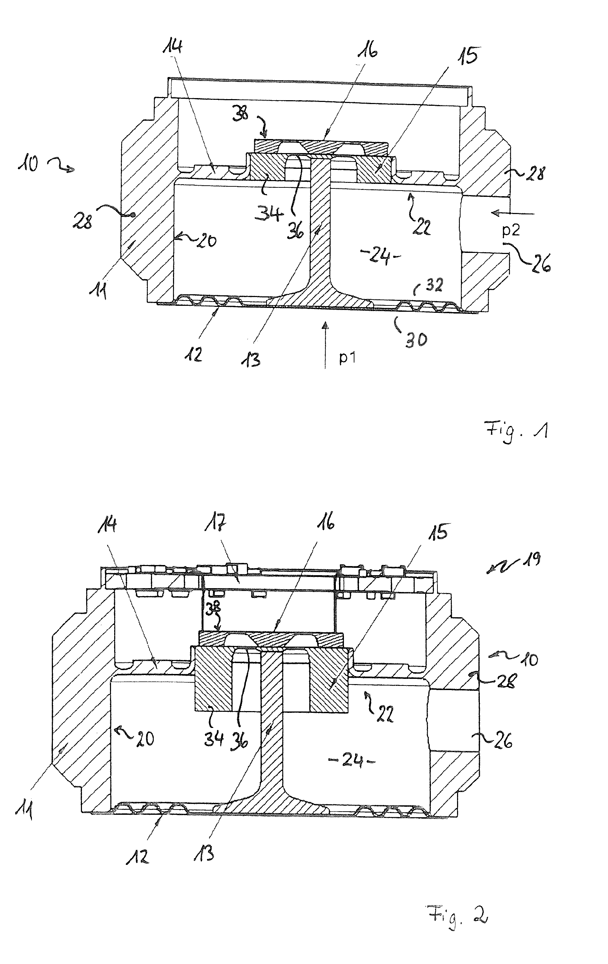

In der Figur 1 ist eine erste Ausführungsform eines Differenzdrucksensorelementes 10 dargestellt, wobei Figur 2 den mit diesem Differenzdrucksensorelement 10 aufgebauten Differenzdrucksensor 19 zeigt. Das Differenzdrucksensorelement 10 weist ein Gehäuse 11, eine erste Membran 12, ein Verbindungselement 13, eine Ausgleichsmembran 14, eine Sensorzelle 15 und ein Messelement 16 auf.

Das Gehäuse 11 ist als Ringgehäuse ausgebildet, wobei die Ausgleichsmembran 4 von einer Innenwand 20 des Ringgehäuses radial nach innen vorsteht und integral mit dem Gehäuse 11 als Kreisringmembran ausgebildet ist.

Die erste Membran 12 ist als Wellmembran ausgeführt und verschließt ein den ersten zu messenden Druck p1 zuzuwendendes Ende des Gehäuses 11 druckdicht.

Die Ausgleichsmembran 4 trägt radial innen die Sensorzelle 15. Die Sensorzelle mit dem Messelement 16 bildet zusammen mit der Ausgleichsmembran 4 ein Membransystem 22, welches ebenfalls druckdicht abschließt, so dass zwischen der ersten Membran 12 und dem Membransystem 22 innerhalb des Gehäuses 11 eine Kammer 24 gebildet ist, die über einen Verbindungskanal 26, der in der Ringwand 28 des Gehäuses 11 gebildet ist, mit dem zweiten Druck p2 beaufschlagbar ist.

Auf diese Weise liegt auf einer nach außen gerichteten ersten Seite 30 der ersten Membran 12 der erste Druck p1 an. Auf der abgewandten zu dem Membransystem 22 hin gerichteten zweiten Seite 32 der ersten Membran 12 liegt der zweite Druck p2 an.

Die Sensorzelle 15 weist einen steifen Ringwandbereich 34 sowie eine zweite Membran 36 auf.

Das Verbindungselement 13 ist als Stößel ausgebildet und verbindet das Zentrum der zweiten Membran 36 mit dem Zentrum der ersten Membran 12, so dass sich die erste Membran 12 und die zweite Membran 36 gemeinsam bewegen.

Die Auslenkung der zweiten Membran 36 gegenüber dem Ringwandbereich 34 der Sensorzelle 15 wird mittels des Messelements 16 erfasst. Das Messelement 16 ist demnach als Wegaufnehmer ausgebildet und ist insbesondere als Biegebalken mit Dehnmessstreifen (nicht dargestellt) in Dünnfilmtechnik hergestellt.

Wie in Figur 2 gezeigt weist der Differenzdrucksensor 19 auf der der ersten Membran 12 abgewandten Seite eine Elektronik 17 (Elektronikbauteil) zur Signalerzeugung und Signalbearbeitung auf.

Das Differenzdrucksensorelement 10 gemäß Figur 1 wird zur Überwachung des in Figur 4 schematisch dargestellten Filters 18 eingesetzt, wobei der vor dem Filter 18 anliegende erste Druck p1 an der ersten Seite 30 der ersten Membran 12 anliegt und der nach dem Filter 18 anliegende zweite Druck p2 über den Verbindungskanal 26 in der Kammer 24 anliegt.

Das Differenzdrucksensorelement 10 hat nur ein einziges Messelement 16 sowie zwei medienkompatible Membrane 12, 36 und das zusammengesetzte Membransystem 22. Dabei wirken nun beide anliegenden Drücke p1 vor dem Filter 18 und p2 nach dem Filter 18 über zwei miteinander gekoppelte medienkompatible Kreisringmembranen, nämlich die erste Membran 12 sowie die Ausgleichsmembran 14 oder die zweite Membran 36 mit dem Messelement 16, in geeigneter Weise zusammen, um ein druckproportionales Differenzsignal zu erzeugen.

Die Ausgleichsmembran 14 trägt zudem die Sensorzelle 15 als Druckmesszelle, auf der wiederum das eigentliche Messelement 16 aufgeschweißt ist. Beide Membranen 12 und 22 sind über den gemeinsamen Stößel - Verbindungselement 13 - miteinander verbunden. Die Steifigkeiten der ersten Membran 12 und des Membransystems 22 sind nun so ausgeführt, dass eine druckinduzierte Bewegung der ersten Membran 12, die dem ersten Druck p1 ausgesetzt ist, über das Membransystem 22 mit der zweiten Membran 36 um einen Faktor (beispielsweise 5-10) abgeschwächt wird. Auf diese Weise braucht nur eine effektive Membranbewegung von wenigen Mikrometern mit dem als Kraftsensor ausgeführten Biegebalken 38, der das Messelement 16 bildet, aufgenommen zu werden.

Das Differenzdrucksensorelement 10 besteht ausnahmslos aus rostfreiem Stahl und/oder unempfindlichen Legierungen (1.4542/17-4PH, INCONEL oder auch 1.4301) und kann für beliebige Anwendung mit trockenen oder nassen Medien eingesetzt werden. Beispielsweise lassen sich Differenzdrücke zwischen zwei trockenen Medien messen, Differenzdrücke zwischen einem trockenen Medium und einem nassen Medium oder Differenzdrücke zwischen zwei nassen Medien. Auch können ganz unterschiedliche Medien gemessen werden, auch solche, die chemisch reaktiv sind.

Die erste Membran 12 kann typischerweise mit einer in der Druckmesstechnik an sich bekannten Wellmembran ausgeführt werden.

Wie in dem zweiten Ausführungsbeispiel gemäß Figur 3 gezeigt, kann die erste Membran 12 aber auch mit einer flachen dünnen unprofilierten Membran 40 gebildet werden. Vergleichbare Elemente sind bei dem in Figur 3 dargestellten zweiten Ausführungsbeispiel mit den gleichen Bezugszeichen wie bei dem in den Figuren 1 und 2 dargestellten ersten Ausführungsbeispiel bezeichnet, wobei deren Beschreibung nicht wiederholt wird.

Bei beiden Ausführungsformen kann die erste Membran eine Dicke im Bereich von einigen 1/10 mm aufweisen. Die Dicke ist abhängig von der verwendeten Fläche zu wählen. Ein typischer Durchmesser der ersten Membran 12 liegt im Bereich um ca. 36mm plus minus 5mm.

Bei beiden Ausführungsformen werden alle Verbindungen zwischen den einzelnen Elementen vorzugsweise mit einer Schweißnaht oder einer Hartlotverbindung realisiert.

Der in der ersten Ausführungsform als Messelement 16 eingesetzte Biegebalken 38 enthält als Dünnfilm aufgesputterte Dehnungsmessstreifen.

Die Dehnungsmessstreifen sind beispielsweise in NiCr, TiON oder Polysilizium ausgeführt. Der Biegebalken 38 kann kostengünstig in einem metallischen Waferprozess gefertigt werden.

Selbstverständlich können als Messelement auch andere Sensortechnologien wie beispielsweise aufgeglaste Siliziumstrukturen Verwendung finden.

Durch die erste Membran 12 und die zweite Membran 36, insbesondere in Verbindung mit dem Membransystem 22 lässt sich einerseits eine Wegminimierung und andererseits eine Temperaturkompensation realisieren. Für Einzelheiten zur Technik der Temperaturkompensation mittels Ausgleichsmembranen wird auf die DE 101 31 688 A1 verwiesen, die Teil der hiesigen Offenbarung darstellt. Diese Druckschrift wird durch Referenz inkorporiert.

Ein Resultat der bevorzugten Ausführungsform ist eine Einstellung des Messsystems auf wenige Mikrometer Weg. Dies erhöht die Lebensdauer des Messelements 16 auf weit über 100 Millionen Druckwechsel-Zyklen. Andersherum führt auch eine druckinduzierte Bewegung der ersten Membrane 12 von der zweiten Seite 32 (Stößelseite) her zu einem Nutzsignal an dem Messelement 16. Typischerweise ist der auf dieser zweiten Seite anliegende Druck - hier der zweite Druck p2 - niedriger als der Eingangsdruck - d.h. hier der erste Druck p1.

Das Differenzdruckmesssystem besitzt wegen der unterschiedlichen Wirkflächen der ersten Membran 12 gegenüber dem ersten Druck p1 und dem zweiten Druck p2 einen Gleichlauf. Die unterschiedlichen Wirkflächen ergeben sich aufgrund der fehlenden Stößelfläche auf der ersten Seite. Der Gleichlauf bedeutet, dass bei gleichmäßig-synchroner Druckerhöhung des ersten Druckes p1 und des zweiten Druckes p2 sich trotz eines anliegenden Nettodifferenzdrucksignals von 0 ein messbares Signal an dem Messelement 16 ergibt. Dieser inhärente systembedingte Gleichlauf kann durch eine geeignete Wahl der Steifigkeiten der Membrane und Elemente des Membransystems 22 in einer Optimierung minimiert werden.

Die Steifigkeit des kombinierten inneren Membransystems 22 liegt vorzugsweise 15 bis 30 Mal höher als die Steifigkeit der ersten Membran 12. Da der Gleichlauf systematisch auftritt, kann dieser ferner in einem Kalibrationslauf elektronisch mit einem Mikrokontroller oder ASIC minimiert werden. Hierzu ist die Elektronik 17 als Platine mit Mikrokontroller oder ASIC ausgebildet.

Das Differenzdrucksensorelement 10 hat eine Temperaturabhängigkeit von etwa 10% des Ausgangssignals bei 60°C Temperaturdifferenz. Die Temperaturdifferenz kann aufbautechnisch minimiert werden, indem das Stößelmaterial mit einem Ausdehnungskoeffizienten gewählt wird, der in etwa halb so groß wie der Ausdehnungskoeffizient der übrigen Materialien ist. Als übrige Materialien werden, wie oben erläutert, vorzugsweise Stahl mit einem Ausdehnungskoeffizient von 11x10⁻⁶ m/K eingesetzt. Demnach wären Materialien als Stößelmaterial geeignet, die Längenausdehnungskoeffizienten von etwa 5x10⁻⁶ m/K besitzen. Solche Materialien finden sich unter anderem bei Hartmetallen oder keramischen Werkstoffen.

Die Membrane 12, 4 sind ähnlich aufgebaut, wie dies in dem Drucksensor der DE 101 31 688 A1 zum Zwecke der Temperaturkompensation vorgeschlagen worden ist. Allerdings wird das hier vorgeschlagene System zur Differenzdruckmessung verwendet, wobei der druckdicht abgeschlossene Raum zwischen den Membranen mit dem zweiten Druck p2 beaufschlagt wird.

Um ein gleichlaufendes Druckmesssystems zu minimieren, ist das Membransystem 22 wesentlich steifer ausgeführt als die erste Membran 12.

Sämtliche Materialien, die mit Medien in Berührung kommen können, sind ausschließlich aus rostfreiem Stahl oder dergleichen medienkompatiblen Materialien gebildet, so dass der Differenzdrucksensor 19 zu vielen Medien kompatibel ist und einen breiten Anwendungsbereich aufweist.

Der Differenzdrucksensor 19 ist weiter in einem sehr großen Druckbereich einsetzbar. Beispielsweise lassen sich Bereiche von 100-340 mbar Differenzdruck bei 4 bis 6 bar Systemdruck messen. Der Drucksensor ist andererseits auch bei viel höheren Drücken, wie z.B. 20 bar Differenzdruck und 400 bar Systemdruck einsetzbar.

Aufgrund des besonderen Aufbaus ist der Differenzdrucksensor 19 weiter auch in einem sehr breiten Temperaturbereich einsetzbar. Einsatzgebiete liegen beispielsweise zwischen 40°C -150°C oder auch bis 200°C.

Bei der zweiten Ausführungsform gemäß Figur 3 wird zum Bilden des Verbindungskanals 26 ein abgeknickter Verlauf - Verlauf mit einem rechten Winkel
- vorgeschlagen. Dies kann Vorteile in Bezug auf den Anschluss des zweiten Druckes p2 haben. Bei der Verwendung im Abgasbereich von Maschinen oder der Verfahrenstechnik könnte es jedoch zu Russbildung im Eingangskanal und in Verbindungskanal 26 kommen. Daher ist die in den Figuren 1 und 2 gezeigte erste Ausführungsform mit breitem Verbindungskanal 26, der geradlinig verläuft, derzeit bevorzugt.

Bei Messen von trockenen, d.h. in der Regel gasförmigen Medien, könnte es unter Umständen zu flüssigen Rückständen kommen, die mit der Zeit die Funktion beeinträchtigen könnten. Es ist daher eine schräge Einbaulage - vorzugsweise 45°
- bevorzugt, so dass flüssige Rückstände, wie beispielsweise Kondenswasser, in einer trockenen Anwendung ablaufen können. Bei einer anderen hier nicht näher dargestellten Ausführungsform ist ein gesonderter Kondenswasserkanal zum Ablauf vorgesehen.

### Bezugszeichenliste:

- 10: Differenzdrucksensorelement
- 11: Gehäuse
- 12: erste Membran
- 13: Verbindungselement
- 14: Ausgleichsmembran
- 15: Sensorzelle
- 17: Elektronik
- 16: Messelement
- 18: Filter
- 19: Differenzdrucksensor
- 20: Innenwand
- 22: Membransystem
- 24: Kammer
- 26: Verbindungskanal
- 28: Ringwand
- 30: erste Seite
- 32: zweite Seite
- 34: Ringwandbereich
- 36: zweite Membran
- 38: Biegebalken
- 40: flache Membran
- p1: erster Druck
- p2: zweiter Druck

## Patentansprüche

1. Differenzdrucksensor (19) zum Messen einer Druckdifferenz zwischen einem ersten Druck (p1) und einem zweiten Druck (p2) mit einer ersten Membran (12), die auf einer ersten Seite (30) mit dem ersten Druck (p1) beaufschlagbar ist, **dadurch gekennzeichnet,**
**dass** die erste Membran (12) an ihrer der ersten Seite (30) abgewandten zweiten Seite (32) mit dem zweiten Druck (p2) beaufschlagbar ist.

2. Differenzdrucksensor (19) nach Anspruch 1,
**dadurch gekennzeichnet,**
**dass** die erste Membran (12) mit einer zweiten Membran (36) gekoppelt ist, wobei die zweite Seite (32) der zweiten Membran (36) zugewandt ist und eine zwischen der ersten Membran (12) und der zweiten Membran (36) gebildete Kammer (24) mit dem zweiten Druck (p2) beaufschlagbar ist.

3. Differenzdrucksensor (19) nach Anspruch 2,
**dadurch gekennzeichnet,**
**dass** die erste Membran (12) und die zweite Membran (36) mittels eines Verbindungselements (13) miteinander gekoppelt sind.

4. Differenzdrucksensor (19) nach Anspruch 3,
**dadurch gekennzeichnet,**
**dass** das Verbindungselement (19 die Zentren der Membrane (12, 36) zur gemeinsamen Bewegung miteinander verbindet.

5. Differenzdrucksensor (19) nach Anspruch 3 oder 4,
**dadurch gekennzeichnet,**
**dass** das Verbindungselement (36) einen Stößel aufweist.

6. Differenzdrucksensor nach einem der Ansprüche 2 bis 5,
**dadurch gekennzeichnet,**
**dass** der zweiten Membran ein Messelement zur Erfassung einer Auslenkung der zweiten Membran zugeordnet ist.

7. Differenzdrucksensor nach einem der Ansprüche 2 bis 6,
**dadurch gekennzeichnet,**
**dass** die zweite Membran Teil eines Membransystems mit mehreren Membranen ist.

8. Differenzdrucksensor nach Anspruch 7,
**dadurch gekennzeichnet,**
**dass** das Membransystem als Temperaturausgleichseinrichtung ausgebildet ist, um unterschiedliche Ausdehnungen der ersten und der zweiten Membran oder eines daran angeschlossenen Messelementes bei Temperaturänderungen zu kompensieren.

9. Differenzdrucksensor nach einem der Ansprüche 2 bis 9,
**dadurch gekennzeichnet,**
**dass** die zweite Membran oder das Membransystem steifer ausgeführt ist als die erste Membran.

10. Differenzdrucksensor nach einem der Ansprüche 2 bis 9,
**dadurch gekennzeichnet,**
**dass** die relativen Steifigkeiten der gekoppelten Membrane und/oder deren Haltelemente so ausgeführt sind, dass eine druckinduzierte Bewegung der durch den ersten Druck beaufschlagbaren ersten Membran über die zweite Membran um einen Faktor von wenigstens 3, insbesondere von 5 bis 10, abgeschwächt wird.

11. Differenzdrucksensor nach einem der voranstehenden Ansprüche, **dadurch gekennzeichnet,**
**dass** wenigstens eine Kreisringmembran vorgesehen ist.

12. Differenzdrucksensor (19 nach einem der voranstehenden Ansprüche, **dadurch gekennzeichnet,**
**dass** alle mit einem den ersten Druck (p1) oder den zweiten Druck (p2) führenden Druckmedium in Berührung kommende Bauelemente des Differenzdrucksensors (19) aus rostfreiem Stahl oder Edelstahllegierungen gebildet sind.

13. Differenzdrucksensor (19) nach einem der voranstehenden Ansprüche, **dadurch gekennzeichnet,**
**dass** er nur ein einziges Messelement (16) zur Erfassung einer Membranauslenkung aufweist.

14. Differenzdrucksensor (19) nach einem der voranstehenden Ansprüche, **dadurch gekennzeichnet,**
**dass** die erste Membran (12) mit der der ersten Seite (30) abgewandten zweiten Seite (32) eine Kammer (24) begrenzt, die über einen Verbindungskanal (26) mit dem zweiten Druck (p2) beaufschlagbar ist.

15. Überwachungsverfahren zur Überwachung eines Filters (18), das ein druckbeaufschlagtes Medium filtert, **gekennzeichnet durch** Messen des Differenzdruckes zwischen einem ersten, vor dem Filter (18) vorherrschenden Druck (p1) und einem zweiten nach dem Filter (18) vorherrschenden Druck (p2) mittels eines Differenzdrucksensors (19) nach einem der voranstehenden Ansprüche.
